Europäisches Patentamt

**European Patent Office**

**Office européen des brevets**

(11) veröffentlichungsnummer: **0 016 428**
A2

## EUROPÄISCHE PATENTANMELDUNG

(21) Anmeldenummer: **80101331.9**

(22) Anmeldetag: **13.03.80**

(51) Int. Cl.$^3$: **G 02 F 1/01**
**G 09 F 9/30**

(30) Priorität: **20.03.79 DE 2910952**

(43) Veröffentlichungstag der Anmeldung:
**01.10.80 Patentblatt 80/20**

(84) Benannte Vertragsstaaten:
**AT CH FR GB IT NL SE**

(71) Anmelder: **SIEMENS AKTIENGESELLSCHAFT Berlin
und München
Postfach 22 02 61
D-8000 München 22(DE)**

(72) Erfinder: **Pape, Heinz, Dipl.-Phys.
Forstenrieder-Allee 17
D-8000 München 71(DE)**

(72) Erfinder: **Quella, Ferdinand, Dr.
Drygalski-Allee 118
D-8000 München 71(DE)**

(72) Erfinder: **Krüger, Hans, Dipl.-Phys.
Peralohstrasse 13
D-8000 München 83(DE)**

(54) **Vorrichtung zur Verbesserung der Erkennbarkeit von passiven Displays.**

(57) Vorrichtung zur Verbesserung der Erkennbarkeit von passiven Displays

Zur Steigerung der Erkennbarkeit bei passiven Displays wird über Auskoppelstellen des Fluoreszenzkörpers oder durch direkte optische Kontaktierung mit dem Fluoreszenzkörper eine Beleuchtung der Anzeigeelemente erreicht. Die passiven Displays können zwischen zwei optischen Zuständen geschaltet werden. In einem Schaltzustand des passiven Displays wird das Fluoreszenzlicht absorbiert und im anderen Schaltzustand diffus reflektiert und damit ausgekoppelt.

FIG1

EP 0 016 428 A2

Croydon Printing Company Ltd.

SIEMENS AKTIENGESELLSCHAFT     Unser Zeichen

Berlin und München     VPA 79 P 7 0 3 8

Vorrichtung zur Verbesserung der Erkennbarkeit von passiven Displays

Die Erfindung betrifft eine Darstellungstechnik gemäß
dem Oberbegriff des Anspruchs 1.

Displays, die kein eigenes Licht erzeugen, sondern nur
das Licht der Umgebung modulieren, müssen dann, wenn
sie auch unter ungünstigen Helligkeitsverhältnissen
anzeigen sollen, mit einer Zusatzbeleuchtung ausgerüstet werden. Diese Lichtquelle verbraucht in aller
Regel Strom und stellt daher einen der wesentlichen
Vorzüge einer passiven Anzeigevorrichtung -den extrem
geringen Leistungsbedarf- infrage. Man ist daher
seit jeher um die Realsierung eines Displaytyps bemüht, der mit möglichst wenig künstlichem Licht auskommt.

Auf diesem Weg ist man mit der Entwicklung des sog.
"fluoreszenzaktivierten Displays" (FLAD) einen großen

Wed 1 The / 20.3.1979

Schritt vorangekommen. Bei einem FLAD befindet sich hinter einem Lichtventil, das bereichsweise zwischen einem lichtdurchlässigen und einem lichtsperrenden Zustand geschaltet werden kann, eine "Fluoreszenzplatte". Diese Platte enthält einen Fluoreszenzstoff, ist an ihren vier Schmalseiten verspiegelt und hat auf ihrer Rückseite Kerben, die jeweils mit einem der schaltbaren Ventilbereiche fluchten. Die Fluoreszenzplatte sammelt einen Großteil des auf sie treffenden Umgebungslichts durch Fluoreszenzstreuung und nachfolgende (Total-) Reflexionen an ihren Grenzflächen, leitet diese Strahlung in ihrem Inneren fort und koppelt sie mit erhöhter Intensität an den Kerben nach vorn aus. Der Helligkeitsverstärkungsfaktor der Fluoreszenzplatte ist in erster Näherung gegeben durch das Verhältnis der lichtsammelnden zur lichtabgebenden Plattenfläche. Nähere Einzelheiten über den Aufbau und die Wirkungsweise eines FLAD's können der DE-OS 25 54 226 entnommen werden.

Die geschilderte FLAD-Version verfügt zweifellos über gute optische Qualitäten, hat aber noch keinen besonders hohen Wirkungsgrad: Die Fluoreszenzplatte wird zum Teil von dem Lichtventil abgedeckt und hat daher nur eine relativ kleine Kollektorfläche; die bisher verwendeten Ventile arbeiten mit Polarisatoren, die durchgehendes Licht erheblich schwächen. Diese Verluste ergeben eine nur mäßige Lichtausbeute von etwa 30%.

Der Erfindung liegt die Aufgabe zugrunde, mit möglichst einfachen Mitteln die Erkennbarkeit von passiven Displays erheblich zu steigern. Dies wird nach einem Verfahren zur Verbesserung der Erkennbarkeit von Vorrichtungen zur optischen Darstellung von Informationen bestehend aus

a) einem Körper (Fluoreszenzkörper), der aus einem Material mit einem Brechungsindex größer 1 besteht, fluoreszierende Partikel enthält und auftreffendes Licht durch Fluoreszenzstreuung und nachfolgende Reflexionen an seinen Grenzflächen sammelt,

b) einem passiven Display, der elektronisch steuerbar zwischen einem absorbierenden Zustand und einem Zustand der Transmission (reflektierender Hintergrund) oder Reflexion schaltet, dadurch gelöst, daß sich der passive Display in dem Fluoreszenzkörper oder vom Beobachter gesehen hinter dem Fluoreszenzkörper befindet, daß ferner Vorkehrungen getroffen sind, die durch Anbringen von Auskoppelstellen am Fluoreszenzkörper oder durch optische Kontaktierung das vom Fluoreszenzkörper gesammelte Licht die Anzeigeelemente beleuchtet.

Der wesentliche Vorteil der Erfindung liegt darin begründet, daß mit einer Vorrichtung nach der Erfindung die Erkennbarkeit von passiven Displays erheblich gesteigert wird.

Weitere vorteilhafte Ausgestaltungen und Weiterbildungen der Erfindung sind Gegenstand besonderer Ansprüche.

Der Lösungsvorschlag soll nun an Hand bevorzugter Ausführungsbeispiele in Verbindung mit den Figuren der Zeichnung näher erläutert werden. In den Figuren sind einander entsprechende Teile mit gleichen Bezugszeichen versehen. Es zeigen:

Figur 1 in einem Seitenschnitt ein elektrochromes Display mit einer Fluoreszenzplatte,

Figur 2 einen Seitenschnitt eines elektrochromen Displays, bei dem der Fluoreszenzkörper ein Bestandteil des Displays ist,

Figur 3 die Parallaxendarstellung bei elektrochromen Displays,

Figur 4 ein elektrochromes Display, bei dem das Display in einem Anzeigeelement untergebracht ist,

Figur 5 einen Seitenschnitt eines Displays, bei dem die Schaltung durch Orientieren elektrischer oder magnetischer Dipole erreicht wird,

Figur 6 einen Seitenschnitt eines Displays, bei dem die Schaltung durch elektrophoretische Effekte bewirkt wird,

Figur 7 einen Seitenschnitt durch ein Display, bei dem in einem flüssigkristallinem System pleo=chroitische Farbstoffe eingelagert sind.

In den Figuren sind für ein Verständnis der Erfindung nicht unbedingt erforderliche Einzelteile eines Displays, beispielsweise die elektrischen Zuleitungen, der Übersicht halber nicht eingezeichnet.

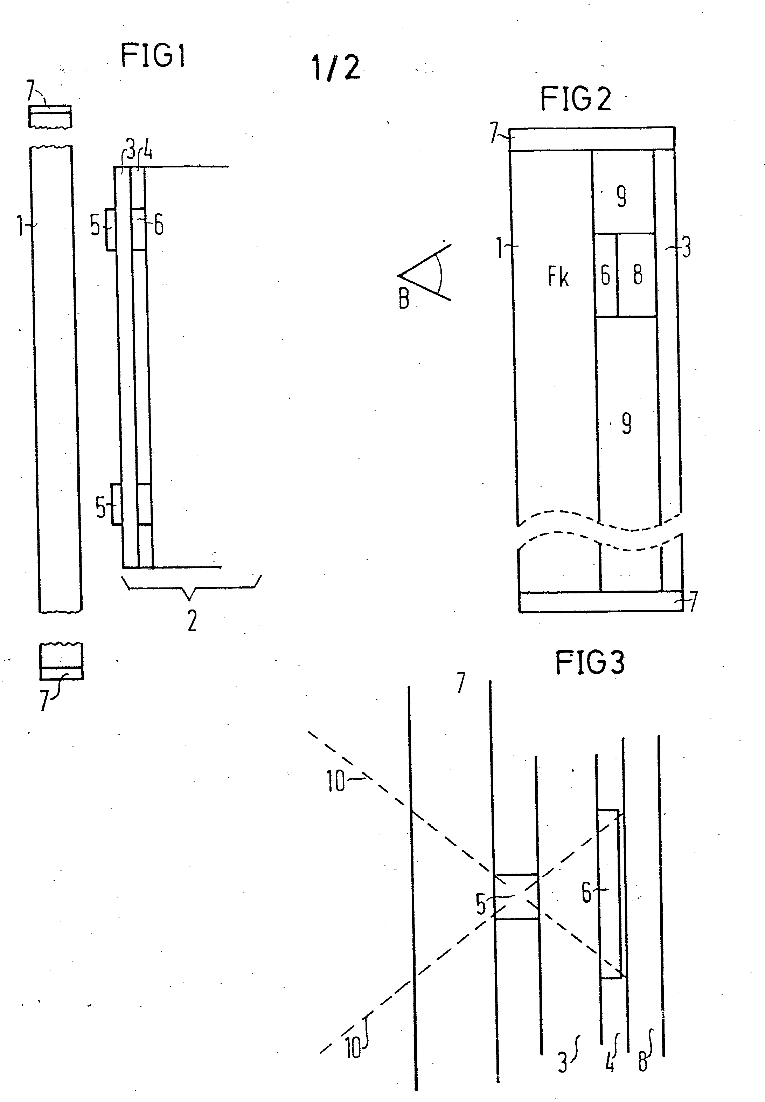

Das Display der Figur 1 enthält im einzelnen eine Fluoreszenzplatte 1, der gegenüber z.B. ein elektrochromer Display, bestehend aus einem transparenten Träger 3 und einer elektrochromen Schicht 4, liegt. Auf dem transparenten Träger 3 sind plattenförmige Erhebungen 5 angebracht, die den umschaltbaren Zonen 6 in der elektrochromen Schicht 4 angepaßt sind. An die elektrochrome Schicht 4 schließt sich bei flüssigelektrochromen Displays der Elektrolyt an, in dem ein diffuser Streuer eingelagert ist. Die Anordnung wird durch eine nicht dargestellte Rückelektrode abgeschlossen. An den Schmalseiten der Fluoreszenzplatte 1 sind Verspiegelungen 7 angebracht.

Nach der Darstellung in der Figur 2 ist die Fluoreszenzplatte 1 in einem elektrochromen Display integriert. Mit 8 ist ein diffuser Streuer, z.B. ein Filz, bezeichnet und mit 9 der Elektrolyt. Die Dicken von Fluoreszenzplatte 1 und transparenten Träger 3 sind unterschiedlich. Um eine bevorzugte Auskoppelung nach vorn zu erhalten, muß die Fluoreszenzplatte 1 wesentlich dicker als die transparente Trägerschicht 3 sein.

In der Figur 3 ist ein Teilausschnitt eines elektrochromen Displays dargestellt, in dem zur Verdeutlichung von parallaxen Effekten zwei Lichtstrahlen 10 gestrichelt eingezeichnet sind. Mit dieser Figur soll veranschaulicht werden, daß zum Parallaxen-Ausgleich der umschaltbare Bereich 6 größer sein muß als die plattenförmige optische Kontaktierung 5.

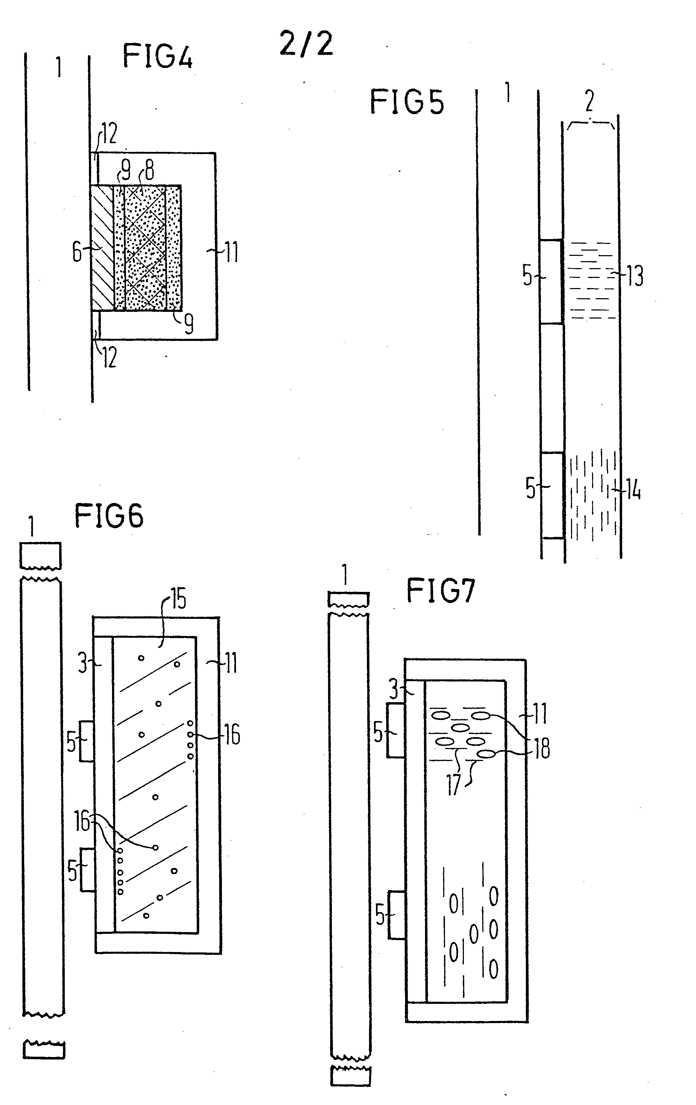

Figur 4 zeigt eine Variante des elektrochromen Displays, bei dem jedes Anzeigeelement aus einem elektrochromen Display besteht, wobei die vordere erste Elektrode 6 direkt auf dem Fluoreszenzkörper 1 aufgebracht ist. Der Elektrolyt 9 ist in dieser Figur punktiert und der Filz 8 doppelt schraffiert dargestellt. Dem elektrochromen Display umgibt ein Gehäuse 11 mit der nicht dargestellten Rückelektrode. Die Kontaktflächen 12 zwischen dem Fluoreszenzkörper 1 und dem Gehäuse 11 sind verspiegelt.

In der Figur 5 ist ein Display dargestellt, bei dem die elektrischen oder magnetischen Dipole in zwei verschiedenen Schaltzuständen 13, 14 gezeigt sind. Mit 13 ist der transparente und mit 14 der reflektierte Zustand dargestellt.

Figur 6 zeigt eine Vorrichtung unter Verwendung eines elektrophoretischen Display. Mit 15 ist eine Trägerflüssigkeit bezeichnet, in der dauernd elektrostatisch aufgeladene Partikel 16 suspendiert sind. Im oberen Teil ist der absorbierende Zustand und im unteren Teil der reflektierende Zustand dargestellt. Dabei muß die suspendierende Flüssigkeit absorbierend und die Partikel reflektierend sein.

In der Figur 7 ist ein flüssigkristallines Display dargestellt. Mit 17 sind die Flüssigkristalle und mit 18 die pleochroitischen Farbstoffe gekennzeichnet. Im Display sind die beiden verschiedenen Schaltzustände dargestellt.

Der wesentliche Vorteil der Erfindung liegt darin begründet, daß bei einer Vorrichtung ein FK und ein passiver Display so miteinerander kombiniert werden, daß auch solche Displays, die mit unpolarisiertem Licht arbeiten vom Fluoreszenzkörper gegenüber der Umgebung aufgehellt werden. Die vorgeschlagene Anordnung führt zu einer erheblichen Steigerung der Erkennbarkeit der verwendeten passiven Displays.

Der Erfindung lag die Aufgabe zugrunde, die Erkennbarkeit von passiven Displays durch möglichst optimale Ausnutzung der Verstärkungseigenschaften der Fluoreszenzplatte unter weitgehender Verwendung bekannter Displaytechniken zu verbessern.

Diese Aufgabe wird erfindungsgemäß durch eine Vorrichtung mit den Merkmalen des Patentanspruchs 1 gelöst.

Wesentlich bei dieser Vorrichtung ist, daß das vom Fluoreszenzkörper gesammelte Licht den Anzeigebereich des Displays beleuchtet und den Display elektronisch zwischen einem Zustand schaltet, der dieses Licht weitgehend absorbiert und einem Zustand, der dieses Licht durch den FK hindurch zum Beobachter reflektiert, streut oder reemittiert.

Das vorgeschlagene Verfahren kommt ohne besondere mechanisch bewegliche Teile und ohne Polarisatoren aus. Die Lichtsammelfläche ist gleich der Oberfläche des Fluoreszenzkörpers, da die Steuerung der Lichtauskoppelung über Absorption und Reflexion keine Abschaltung der Anzeigeelemente wie beim herkömmlichen FLAD (Fluoreszenzaktivierter Display, Flüssigkristallanzeige zwischen FK und Beobachter) bewirkt.

Die Beleuchtung der Displayanzeigen läßt sich auf zwei Wegen erreichen und zwar, einmal durch einen direkten optischen Kontakt zwischen Display und FK, zum anderen durch Auskoppeln des Fluoreszenzlichtes aus dem FK auf den Display. Beim direkten optischen Kontakt wird das Displaybild durch die Form der Kontaktierung bestimmt. Zweckmäßigerweise hat die Kontaktierung die Form der Anzeigesegmente.

Sofern die Kontaktierung sich über die gesamte Displayfläche erstreckt, muß für eine Auskoppelung ausschließlich im Bereich der Anzeigesegmente gesorgt werden. Dies erfolgt, wie in Figur 2 für elektrochrome Displays dargestellt, durch eine integrierte Anordnung von Display und FK mit den in Anspruch 25 genannten Eigenschaften.

Bei Display-Konstruktionen, bei denen Flüssigkeiten Verwendung finden und der Fluoreszenzkörper Bestandteil der Gefäßwand (vgl. Figur 4) ist, müssen Vorkehrungen getroffen werden, daß durch angrenzende Wände, die

Fluoreszenzlicht auskoppeln, keine unerwünschte Anzeige erzeugt wird. Dies wird, wie in Figur 4 gezeigt, entweder durch Absorption dieses Lichtes in einer Farbschicht (12) zwischen FK und Wand oder durch Verspiegelung (12) dieses Bereichs erreicht.

Ist kein optischer Kontakt zwischen FK und Display vorhanden, so muß der FK im Bereich der Anzeigesegmente mit Lichtaustrittsfenstern, vorzugsweise plattenförmigen Erhebungen, versehen sein.

Vorteilhafterweise sind die plattenförmigen Erhebungen seitlich verspiegelt. Solche Displays, bei denen die schaltbare Schicht nicht auf einem transparenten Träger aufgebracht werden muß, sondern die zugehörige vordere Elektrode die Oberfläche des Anzeigebereichs bildet, (beispielsweise ein elektrochromer Festkörperdisplay) kann auf den vorher erwähnten optischen Kontakt verzichtet werden.

Zu einer Weiterbildung der Erfindung sind im direkten optischen Kontakt die Kontaktierungsflächen Erhebungen am FK. Entsprechend können die Kontaktierungen auch Erhebungen am Display sein.

Nach einer weiteren Ausbildung der Erfindung können die Kontaktierungen aus einem transparenten Material bestehen und auf die Oberfläche des Displays oder die des FK, z.B. durch Siebdruck, aufgebracht sein.

Es ist vorteilhaft, wenn die Kontaktierung dabei gleichzeitig ein Klebstoff ist. Weiterhin ist es von Vorteil, wenn die Absorption des absorbierenden Schaltzustandes des passiven Displays und die Emission des Fluoreszenzkörpers aufeinander abgestimmt sind.

In einer Weiterbildung der Erfindung werden die optisch nicht kontaktierenden Bereiche zur Kontrasterhöhung mit einer Kontrastfolie belegt. Nach einer Weiterbildung der Erfindung werden die optisch nicht kontaktierenden Bereiche des Displays eingefärbt.

Vorzugsweise sind die Farbe der Folie oder der Einfärbung in Übereinstimmung mit dem absorbierenden Zustand des Displays.

In einer Weiterbildung der Erfindung sind die nicht schaltbaren Bereiche der optischen Kontaktierung an der FK-Fläche verspiegelt (12 in Fig. 4).

In einer Weiterbildung sind die nicht schaltbaren Bereiche der optischen Kontaktierung an den Grenzflächen zum FK in der Farbe des absorbierenden Displayzustandes eingefärbt (vgl. 12 in Fig. 4).

Nach weiteren Ausbildungen der Erfindung ist der Display ein fest-elektrochromer Display oder ein flüssigelektrochromer Display entsprechend der prinzipiellen Darstellung in Fig. 1. Bevorzugte elektrochrome Materialien und Schichten aus $WO_3$ oder $M_oO_3$. Bei einem fest-elektrochromen Display können die Anzeigesegmente direkt auf dem FK aufgebracht sein.

Im Falle eines flüssig-elektrochromen Displays wird der umschaltbare Bereich des ECD größer oder mindestens gleich groß wie die optische Kontaktierung gewählt. Nach Figur 3 ergibt sich durch eine kleinere optische Kontaktierung als die Fläche des umschaltbaren Bereiches ein Parallaxenausgleich. Zur Vergrößerung des Beobachtungswinkels sind auch dünne Kontaktierungsschichten von Vorteil.

Bereiche des internen diffusen Streuers 8 in Figur 2 bzw. Figur 3 im flüssigelektrochromen Display, die nicht zur Anzeige beitragen, werden vorteilhaft in der Farbe des absorbierenden Zustandes der elektrochromen Schicht eingefärbt. Dies wird dann wichtig, wenn bei sehr kleinen Displays der umschaltbare Bereich sehr klein gewählt werden muß.

Nach einer Weiterbildung der Erfindung sind Bereiche des internen diffusen Streuers im flüssig-elektrochromen Display, die zur Anzeige beitragen, fluoreszierend eingefärbt. Auf diese Weise lassen sich mehrfarbige Anzeigen erzeugen.

Eine günstige Anordnung des Displays ist es, wenn, wie in Figur 2 einer der transparenten Träger (aus Figur 1) von ECD-Elektroden und elektrochromer Schicht mit dem FK identisch ist. Dadurch kann der Gesamtaufbau wesentlich vereinfacht und kompakter ausgeführt werden. Der Träger der rückseitigen Elektroden muß dabei ebenfalls transparent oder ein FK sein.

Vorteilhaft ist es dabei, daß der Brechungsindex des Elektrolyten mit dem des FK ungefähr übereinstimmt. Die elektrochrome Schicht sowie die diffusen Streuer existieren nur im Anzeigebereich und das ganze System ist nach Art eines FK randverspiegelt.

In einer Weiterbildung der Erfindung wird -wie in Figur 2 schon schematisch ausgeführt- die Dicke des FK (1) wesentlich größer gewählt als die der rückwärtigen Schicht (3). Dadurch wird das Licht bevorzugt in Richtung auf den Beobachter ausgekoppelt.

Löst man in dem transparenten Elektrolyten (9 in Figur 2.) fluoreszierende Farbstoffe, so wird nach einer Weiterbildung der Erfindung ebenfalls eine Erhöhung der Helligkeit erzielt.

Eine Kontrasterhöhung erreicht man, wenn man den diffusen Streuer (8 in Figur 2) mit einem anderen Fluoreszenzfarbstoff*als er im FK vorhanden ist. Dieser zweite Fluoreszenzfarbstoff absorbiert Licht des FK und emittiert bei längerer Wellenlänge.

In einer Weiterbildung der Erfindung wird für jedes unabhängige Schaltelement (Anzeigesegment),wie in Figur 4 skizziert, eine ECD-Struktur auf den FK gebracht. Der FK ersetzt dabei den transparenten Träger (3 in Figur 1) der vorderen Elektrode. Um unerwünschtes Auskoppeln an der Kontaktstelle Gefäßwand (11) mit FK (1) zu vermeiden, können die Kontaktstellen verspiegelt (12) oder in der Farbe des absorbierenden Displayzustandes eingefärbt werden.

In einer Weiterbildung der Erfindung wird als passiver Display ein elektrophoretischer Display (vgl. Figur 6) verwendet. Hierbei werden in einem Schaltzustand elektrisch geladene Partikel an die Vorderseite (in Figur 6 unterer Schaltzustand) und im anderen Schaltzustand auf die Rückseite (oberer Schaltzustand) bewegt.

Vorteilhaft ist es dabei, daß die Flüssigkeit für das Fluoreszenzlicht absorbierend, insbesondere schwarz, eingefärbt ist. Die elektrisch geladenen Pigmente (16) sind dabei farbig, vorzugsweise weiß,zu wählen.

*eingefärbt

Vorteilhaft ist es fluoreszierende Pigmente zu verwenden.

In einer Weiterbildung der Erfindung wird ein passiver Display verwendet, bei dem absorbierender und reflektierender Zustand durch Orientierung magnetischer Dipole in einer Flüssigkeit erzeugt werden. In Figur 5 ist oben der transparente (13) und unten (14) der lichtundurchlässige Zustand eingezeichnet. Im Zustand 13 (Displaytransparent) muß auf der Rückseite eine Reflektorfolie angebracht sein.

Vorteilhaft ist hierbei, daß die magnetisch orientierbaren Partikel eingefärbt sind.

In einer Weiterbildung der Erfindung wird ein passiver Display verwendet, bei dem elektrische Dipole in einer Suspension orientiert werden können. Die beiden Schaltzustände entsprechen denen in Figur 5.

Wie bei den magnetischen Dipolen ist bei den elektrischen eine Einfärbung von Vorteil.

In einer Weiterbildung der Erfindung wird ein passiver Display verwendet, bei dem Kohlenstoffasern oder andere stäbchenförmige Partikel (z.B. Herapatit) in andere Flüssigkeiten suspendiert sind. Hierbei kann zwischen einem transparenten Zustand (13 in Figur 5 oben) und einem undurchlässigen (schwarzen) ungeordneten oder geordneten (14 in Figur 5 unten) geschaltet werden.

In einer Weiterbildung der Erfindung wird ein passiver Display verwendet, bei dem zwischen flüssige Kristalle pleochroitische Farbstoffe eingelagert werden. Entsprechend der Darstellung in Figur 7 wird zwischen nicht absorbierenden (Fig. 7 oben) und einem absorbierenden Zustand (Fig. 7 unten) geschaltet.

In einer Weiterbildung der Erfindung werden die pleochroitischen Farbstoffe fluoreszierend gewählt.

Die Erfindung ist nicht auf die dargestellten Beispiele beschränkt. Vor allem in konstruktiver Hinsicht besteht noch ein erheblicher Spielraum. So wird der Fluoreszenzkörper zwar vorwiegend eine Platte mit verspiegelten Seitenflächen sein und auf seiner Rückseite mit dem Niederschlag kontaktiert werden; denkbar sind aber auch andere Körperformen (DE-OS 27 24 748) und/oder Lichtaustrittsfenster auf der Körpervorderseite (DE-OS 25 54 226).

7 Figuren
40 Patentansprüche

-1-

79 P 7 0 3 8

Patentansprüche

1. Vorrichtung zur Verbesserung der Erkennbarkeit von Vorrichtungen zur optischen Darstellung von Informationen bestehend aus

a) einem Körper (Fluoreszenzkörper), der aus einem Material mit einem Brechungsindex $> 1$ besteht, fluoreszierende Partikel enthält und auftreffendes Licht durch Fluoreszenzstreuung und nachfolgende Reflexionen an seinen Grenzflächen sammelt,

b) einem passiven Display, der elektronisch steuerbar zwischen einem absorbierenden Zustand und einem Zustand der Transmission (reflektierender Hintergrund) oder Reflexion schaltet, dadurch g e k e n n z e i c h - n e t , daß sich der passive Display in dem Fluoreszenzkörper oder vom Beobachter gesehen hinter dem Fluoreszenzkörper befindet und die Anzeigeelemente durch Anbringen von Auskoppelstellen am Fluoreszenzkörper oder durch optische Kontaktierung durch Fluoreszenzlicht beleuchtet werden.

2. Vorrichtung nach Anspruch 1, dadurch g e k e n n - z e i c h n e t , daß zwischen dem Fluoreszenzkörper und dem Display eine optische Kontaktierung existiert.

3. Vorrichtung nach Ansprüchen 1 und 2, dadurch g e - k e n n z e i c h n e t , daß die optische Kontaktierung die Form der Anzeigesegmente hat.

4. Vorrichtung nach den Ansprüchen 1 und 2, dadurch g e k e n n z e i c h n e t , daß die optische Kontaktierung sich über die ganze Fläche des Displays erstreckt.

5. Vorrichtung nach den Ansprüchen 1 und 2, dadurch g e k e n n z e i c h n e t , daß die optische

Kontaktierung im Bereich der Anzeigesegmente und in konstruktiv bedingten Bereichen besteht.

6. Vorrichtung nach Anspruch 1, dadurch  g e k e n n - z e i c h n e t , daß kein optischer Kontakt zwischen dem Fluoreszenzkörper und dem Display besteht.

7. Vorrichtung nach Anspruch 6, dadurch  g e k e n n - z e i c h n e t , daß der Bereich der Anzeigesegmente mit Lichtaustrittsfenstern am Fluoreszenzkörper versehen ist.

8. Vorrichtung nach Anspruch 1 und 7, dadurch  g e - k e n n z e i c h n e t , daß die Lichtaustrittsfenster plattenförmige Erhebungen auf dem Fluoreszenzkörper sind.

9. Vorrichtung nach Anspruch 8, dadurch  g e k e n n - z e i c h n e t , daß die Seiten der plattenförmigen Erhebungen verspiegelt sind.

10. Vorrichtung nach den Ansprüchen 1 bis 3, dadurch  g e k e n n z e i c h n e t , daß die Kontaktierungs- flächen Erhebungen am Fluoreszenzkörper sind.

11. Vorrichtung nach den Ansprüchen 1 bis 3, dadurch  g e k e n n z e i c h n e t , daß die Kontaktierungen Erhebungen am Display sind.

12. Vorrichtung nach den Ansprüchen 1 bis 3, dadurch  g e k e n n z e i c h n e t , daß die Erhebungen zur Kontaktierung aus transparentem Material bestehen, auf die Fluoreszenzkörperoberfläche oder Displayoberfläche, z.B. durch Siebdruck, aufgebracht sind.

13. Vorrichtung nach Anspruch 12, dadurch  g e k e n n -

z e i c h n e t , daß die optische Kontaktierung ein
Kleber ist.

14. Vorrichtung nach Anspruch 13, dadurch g e k e n n -
z e i c h n e t , daß die Absorption des absorbierenden
Schaltzustandes des passiven Displays und die Emission
des Fluoreszenzkörpers aufeinander abgestimmt sind.

15. Vorrichtung nach Anspruch 1 bis Anspruch 3 und
Anspruch 5 bis Anspruch 14, dadurch g e k e n n -
z e i c h n e t , daß zwischen Fluoreszenzkörper und
Display in den optisch nicht kontaktierenden Bereichen
eine farbige Kontrastfolie eingelegt ist, wobei die Farbe
der Folie vorzugsweise mit der des absorbierenden Anzeigezustands im Display übereinstimmt.

16. Vorrichtung nach Anspruch 14, dadurch g e k e n n -
z e i c h n e t , daß die optisch nicht mit dem Fluoreszenzkörper kontaktierende Bereiche des Displays eingefärbt sind, wobei die Farben vorzugsweise mit deren des
absorbierenden Anzeigezustands im Display übereinstimmen.

17. Vorrichtung nach Anspruch 5, dadurch g e k e n n -
z e i c h n e t , daß die nicht schaltbaren Bereiche
der optischen Kontaktierung an der Fluoreszenzkörperfläche verspiegelt sind.

18. Vorrichtung nach Anspruch 5, dadurch g e k e n n -
z e i c h n e t , daß die nicht schaltbaren Bereiche der
optischen Kontaktierung an den Grenzflächen zum Fluoreszenzkörper in der Farbe des absorbierenden Displayzustands
eingefärbt sind.

19. Vorrichtung nach den Ansprüchen 1 und 2, dadurch
g e k e n n z e i c h n e t , daß der Display ein fest

0016428

79 P 7 0 3 8

elektrochromer Display ist.

20. Vorrichtung nach Anspruch 1, dadurch  g e k e n n - z e i c h n e t  , daß der Display ein flüssig elektro- chromer Display ist.

21. Vorrichtung nach Anspruch 19, dadurch  g e k e n n - z e i c h n e t  , daß die Anzeigesegmente direkt auf dem Fluoreszenzkörper aufgebracht sind.

22. Vorrichtung nach Anspruch 20, dadurch  g e k e n n - z e i c h n e t  , daß der umschaltbare Bereich des elektrochromen Display größer oder gleich der optischen Kontaktierung ist.

23. Vorrichtung nach Anspruch 20, dadurch  g e k e n n - z e i c h n e t   , daß Bereiche des internen diffusen Streuers,die nicht zur Anzeige betragen sollen,absorbierend, insbesondere in der Farbe des absorbierenden Zustands der elektrochromen Schicht,eingefärbt sind.

24. Vorrichtung nach Anspruch 20, dadurch  g e k e n n - z e i c h n e t  , daß Bereiche des internen diffusen Streuers, die zur Anzeige beitragen, vorzugsweise fluoreszierend eingefärbt sind.

25. Vorrichtung nach Anspruch 4 und folgenden, dadurch  g e k e n n z e i c h n e t  , daß
a) der Fluoreszenzkörper und der transparente Träger von elektrochromen Displayelektroden und der elektrochromen Schicht identisch sind,
b) der Träger der rückseitigen elektrochromen Displayelektroden transparent ist oder ebenfalls ein Fluoreszenzkörper ist,
c) der Brechungsindex des Elektrolyten ungefähr mit dem des Fluoreszenzkörpers übereinstimmt,

d) die elektrochrome Schicht sowie der diffuse Streuer nur im Anzeigebereich existieren,

e) der Elektrolyt transparent ist und

f) das ganze System nach Art eines Fluoreszenzkörpers randverspiegelt ist.

26. Vorrichtung nach Anspruch 25, dadurch g e k e n n - z e i c h n e t , daß der Fluoreszenzkörper (1) wesentlich dicker ist als der transparente Träger (3) (Fig. 2).

27. Vorrichtung nach Anspruch 25, dadurch g e k e n n - z e i c h n e t , daß im transparenten Elektrolyten fluoreszierende Farbstoffe gelöst sind.

28. Vorrichtung nach Anspruch 25, dadurch g e k e n n - z e i c h n e t , daß der diffuse Streuer mit einem anderen fluoreszierenden Farbstoff eingefärbt ist.

29. Vorrichtung nach Anspruch 5, dadurch g e k e n n - z e i c h n e t , daß für jedes unabhängige Schaltelement eine elektrochrome Displaystruktur auf dem Fluoreszenzkörper aufgebracht wird, wobei der Fluoreszenzkörper den transparenten Träger der vorderen Elektrode ersetzt.

30. Vorrichtung nach Anspruch 1, dadurch g e k e n n - z e i c h n e t , daß als passives Display ein elektro- foretischer Display verwendet wird.

31. Vorrichtung nach Anspruch 30, dadurch g e k e n n - z e i c h n e t , daß die Flüssigkeit vorzugsweise schwarz eingefärbt ist.

32. Vorrichtung nach Anspruch 30, dadurch g e k e n n -

zeichnet , daß die Pigmente farbig, z.B. weiß, sind.

33. Vorrichtung nach Anspruch 32, dadurch gekennzeichnet , daß die Pigmente fluoreszierend sind.

34. Vorrichtung nach Anspruch 1, dadurch gekennzeichnet , daß ein Display verwendet wird, bei dem absorbierender und reflektierender Zustand durch Orientierung magnetischer Dipole in einer Flüssigkeit erzeugt wird.

35. Vorrichtung nach Anspruch 34, dadurch gekennzeichnet , daß die magnetischen Partikel eingefärbt sind.

36. Vorrichtung nach Anspruch 1, dadurch gekennzeichnet , daß als Display eine koloide Suspension verwendet wird.

37. Vorrichtung nach Anspruch 36, dadurch gekennzeichnet , daß eine koloide Suspension von Fasern, z.B. Kohlenstoffasern oder Herapatit, verwendet wird.

38. Vorrichtung nach Anspruch 1, dadurch gekennzeichnet , daß in einem flüssigkristallinen Display pleochroitische Farbstoffe eingebracht sind.

39. Vorrichtung nach Anspruch 38, dadurch gekennzeichnet , daß fluoreszierende Farbstoffe Verwendung finden.

40. Vorrichtung nach Anspruch 38, dadurch gekennzeichnet , daß der Display rückseitig mit fluoreszierenden Partikeln beschichtet ist.

FIG1

FIG2

FIG3

FIG4

FIG5

FIG6

FIG7